# EUROPÄISCHE PATENTSCHRIFT

(11) **EP 2 631 116 B1**
(45) Veröffentlichungstag und Bekanntmachung des Hinweises auf die Patenterteilung: **28.11.2018**
(21) Anmeldenummer: 13000912.9
(22) Anmeldetag: 22.02.2013
(51) Int. Cl.: B60N 2/865, B60N 2/888, B60N 2/829, B60N 2/90, B60N 2/806

(54) **Kopfstütze**
Headrest
Appuie-tête

(30) Priorität: 22.02.2012 DE 102012003367
(43) Veröffentlichungstag der Anmeldung: 28.08.2013
(73) Patentinhaber: GRAMMER AG, 92224 Amberg (DE)
(72) Erfinder: Kotz, Maximilian, 92286 Rieden (DE)
(74) Vertreter: Roche, von Westernhagen & Ehresmann

(56) Entgegenhaltungen:
- DE-A1- 3 519 351
- DE-A1- 19 652 476
- DE-A1- 19 919 561
- DE-A1-102007 024 000

## Beschreibung

Die Erfindung betrifft eine Kopfstütze. Eine solche Kopfstütze ist z.B. in der DE 35 19 351 C2 bzw. in der DE 35 19 351 A1 beschrieben. Die Kopfstütze weist eine Höhenverstellung auf, wobei ein das Kopfpolster tragender Kopfkasten relativ zu den Tragstangen mittels eines elektrischen Antriebsmotors verlagerbar ist. Der Antriebsstrang umfasst eine Überlastsicherung derart, dass der Antriebsmotor und Wellen, die den Kopfkasten antreiben, durch eine drehelastische Kupplung drehverbunden sind. Gemäß einem zweiten Aspekt der Erfindung besteht die Überlastsicherung darin, dass die Wellen jeweils Antriebsräder aufweisen, die auf einer Laufbahn abrollen, welche der Tragstange zugeordnet ist. Das Antriebsrad ist als Reibrad ausgestaltet.

In der DE 10 2009 049 946 A1 ist eine Kopfstütze beschrieben, die eine an Tragstangen befestigte Trägerplatte sowie eine relativ zu der Trägerplatte in X-Richtung verlagerbare Platte umfasst. Eine Führungsvorrichtung umfasst der Platte zugeordnete Führungsstangen, die in Führungsbuchsen gelagert sind, welche der Trägerplatte zugeordnet sind. Der Antrieb der Platte erfolgt über eine Antriebswelle, die mit zwei Zahnrädern versehen ist, wobei jedes Zahnrad mit einer an der Führungsstange befestigten Zahnschiene zusammenwirkt. Auf der Antriebswelle ist ein Sperrrad befestigt. Ein Verriegelungsmittel ist lösbar mit dem Sperrad in Eingriff bringbar. Befindet sich das Verriegelungsmittel in Eingriff mit dem Sperrad ist die Bewegung der Platte blockiert.

In der DE 198 00 040 B4 ist eine Kopfstütze beschrieben, die mittels Verzahnungen höhenverstellbar ist, wobei durch die Höhenverstellung zugleich eine Neigeverstellung des Kopfanlageteils durchgeführt wird.
Die DE 297 23 240 U1 beschreibt eine Kopfstütze, bei welcher die Sitzhöhenverstellung mit der Höhenverstellung der Kopfstütze gekoppelt ist. Wird der Sitz angehoben, stellt sich die Kopfstütze nach unten. Wird der Sitz gesenkt, stellt sich die Kopfstütze nach oben. Bei einem Ausführungsbeispiel erfolgt der Antrieb der Höhenverstellung der Kopfstütze über eine Zahnwelle, die mit Verzahnungen der Kopfstützentragstangen zusammenwirkt.

In der DE 10 2004 030 319 A1 ist eine Kopfstütze beschrieben, bei welcher ein Kopfanlageteil höhenverstellbar auf Tragstangen gelagert ist. Den Tragstangen ist eine Verzahnung zugeordnet, die mit einem Antriebsritzel zusammenwirkt, um die Kopfstütze in der Höhe zu verstellen. Ein flexibles Kopfpolster ist über das Kopfanlageteil gelegt und in seiner Form veränderbar ausgebildet.

Es war Aufgabe der Erfindung eine Kopfstütze zu schaffen, die wenigstens eine Verstellmöglichkeit aufweist, und die dennoch eine große Sicherheit bietet.

Die Aufgabe wird gelöst durch eine Kopfstütze mit den Merkmalen des Anspruchs 1.

Die Kopfstütze ist mittels mindesten einer Tragstange an der Rückenlehne eines Fahrzeugsitzes gehalten. Die Kopfstütze umfasst wenigstens ein Verstellteil, welches mit mindestens einem Antrieb relativ zu der Rückenlehne verlagerbar ist. Z.B. ist das Verst ellteil horizontal verstellbar und relativ zu einem Träger verlagerbar, welcher auf der Tragstange gelagert ist. Zusätzlich oder gemäß einer alternativen Ausführungsform ist der Träger relativ zu der Tragstange oder relativ zu der Rückenlehne verlagerbar. Die Kopfstütze umfasst eine erste Antriebseinrichtung, die mittelbar oder unmittelbar an dem Verstellteil befestigt ist. Des Weiteren umfasst die Kopfstütze eine zweite Antriebseinrichtung, die mittelbar oder unmittelbar an der Rückenlehne befestigt ist. Z.B. ist die zweite Antriebseinrichtung an dem Träger der Kopfstütze befestigt.

Träger ist im Sinne der Erfindung ein Teil, welches unbewegbar oder bewegbar an der Tragstange befestigt ist. Der Träger kann z.B. an zwei Tragstangen befestigt sein und diese miteinander verbinden.

Der Antrieb umfasst eine Überlastsicherung, welche zwischen einer Grundposition und einer Auslöseposition bewegbar ist. Durch Überschreiten einer auf das Verstellteil wirkenden Maximalkraft ist die Überlastsicherung von der Grundposition in die Auslöseposition bewegbar. In der Auslöseposition ist der Antrieb teilweise oder vollständig von der auf das Verstellteil wirkenden Kraft entlastet. Z.B. wirkt in der Auslöseposition keine Kraft mehr von dem Verstellteil auf den Antrieb. Gemäß einer alternativen Ausführungsform wird ein Teil der auf das Verstellteil wirkenden Kraft nicht von dem Antrieb sondern von wenigstens einem anderem Teil der Kopfstütze aufgenommen. Z.B. kann wenigstens ein Teil der auf das Verstellteil wirkenden Kraft von dem Träger aufgenommen werden.

Die Überlastsicherung umfasst eine Kupplung, welche aus einer Kupplungsposition in eine Entkupplungsposition bewegbar ist. Die Kupplung kann z.B. dem Antriebsstrang für das Verstellteil zugeordnet sein. Die Kupplung umfasst wenigstens erste und zweite Kupplungsmittel, die zwischen einer Kupplungsposition und einer Entkupplungsposition bewegbar sind. Die Kupplungsmittel werden z.B. durch Überschreiten einer auf die Kupplungsteile wirkenden Maximalkraft von der Kupplungsposition in die Entkupplungsposition bewegt.

Die Überlastsicherung umfasst eine Verriegelungsvorrichtung, welche durch eine Bewegung der Kupplung aus der Kupplungsposition in die Entkupplungsposition aus einer entriegelten Position in eine verriegelte Position bewegt wird, wobei in der verriegelten Position eine Bewegung des Verstellteils arretiert ist. Auf diese Weise wird die auf das Verstellteil wirkende Kraft von der Verriegelungsvorrichtung aufgenommen und wirkt nicht mehr auf den Antrieb.

Der Vorteil der Erfindung besteht darin, dass durch eine hohe auf das Verstellteil wirkende Kraft der Antrieb nicht zerstört wird.

Die ersten Kupplungsmittel sind z.B. einer Spindelmutter des Antriebs des Verstellteils und die zweiten Kupplungsmittel einem an dem Träger ausgebildeten Sitz für die Spindelmutter zugeordnet. Die Kupplung kann derart ausgebildet sein, dass sie aus der Enkupplungsposition in die Kupplungsposition rückstellbar ist. Alternativ kann die Kupplung z.B. derart ausgebildet sein, dass sie lediglich von der Kupplungsposition in die Entkupplungsposition bewegbar ist. Das ist z.B. der Fall, wenn durch das Bewegen in die Entkupplungsposition Teile der Kupplung zerstört oder plastisch verformt werden.

Eine weitere Ausführungsform ist dadurch gekennzeichnet, dass die Kupplung der ersten Antriebseinrichtung und / oder der zweiten Antriebseinrichtung zugeordnet ist. Die Kupplung kann z.B. in die erste Antriebseinrichtung oder in die zweite Antriebseinrichtung integriert sein. Die Kupplung kann z.B. zwischen der ersten und der zweiten Antriebseinrichtung ausgebildet sein.

Eine andere Ausgestaltung der Erfindung ist dadurch gekennzeichnet, dass der Antrieb eine Spindel und eine Spindelmutter umfasst, wobei die Spindel mit der Spindelmutter in Eingriff ist. Die Spindel ist z.B. der ersten Antriebseinrichtung und die Spindelmutter der zweiten Antriebseinrichtung zugeordnet. Die Spindelmutter ist z.B. einem Träger der Kopfstütze zugeordnet. Die Spindel ist z.B. an dem Verstellteil befestigt. Durch Drehen der Spindel ist dann z.B. das Verstellteil relativ zu dem rückenlehnenfesten Teil, z.B. dem Träger, bewegbar. Das Drehen der Spindel kann z.B. durch einen Antriebsmotor erfolgen.

Eine andere Ausführungsform zeichnet sich dadurch aus, dass die Kupplung eine Feder umfasst, wobei die elastische Rückstellkraft der Feder die Kupplung durch Kraftschluss in der Kupplungsposition, z.B. in einem Federsitz, hält und bei einem Überschreiten der auf das Verstellteil wirkenden Maximalkraft die Kupplung durch Lösen des Kraftschlusses in die Entkupplungsposition bewegbar ist.

Die Feder ist z.B. der Spindelmutter zugeordnet. Z.B. ist die Feder fest an der Spindelmutter gehalten.

Eine andere Ausgestaltung der Erfindung ist dadurch gekennzeichnet, dass die Feder mit ersten Formschlusselementen versehen ist, welche mit zweiten Formschlusselementen eines Federsitzes formschlüssig lösbar in Eingriff bringbar sind. Z.B. ist der Federsitz dem Träger der Kopfstütze zugeordnet.

Z.B. umfasst die Verriegelungsvorrichtung wenigstens ein erstes rückenlehnenfestes Verriegelungselement, welches mit mindestens einem zweiten verstellteilfesten Verriegelungselement lösbar in Eingriff bringbar ist. Das rückenlehnenfeste Teil ist z.B. an einem Träger gehalten. Das erste Verriegelungselement wird z.B. von einem Halteelement außer Eingriff mit dem zweiten Verriegelungselement gehalten. Das Halteelement ist z.B. mit der Kupplung derart verbunden, dass es bei einer Bewegung der Kupplung in die Entkupplungsposition, das erste Verriegelungselement freigibt, so dass es sich in Eingriff mit dem zweiten Verriegelungselement bewegen kann.

Das erste Verriegelungselement ist z.B. von einem Schieber und das zweite Verriegelungselement z.B. von einer Verzahnung gebildet. Der Schieber ist z.B. von dem Halteelement außer Eingriff mit der Verzahnung gehalten. Der Schieber kann z.B. in Eingriff mit der Verzahnung belastet sein. Der Schieber wird z.B. von einem Sicherungsbügel außer Eingriff mit der Verzahnung gehalten. Durch Bewegen der Kupplung in die Entkupplungsposition wird beispielsweise der Sicherungsbügel verschwenkt und gibt den Schieber frei, so dass sich dieser in Eingriff mit der Verzahnung bewegen kann.

Weitere Vorteile der Erfindung ergeben sich anhand eines in den Fig. dargestellten Ausführungsbeispiels. Es zeigen:
Fig.1 eine schematische perspektivische Darstellung der erfindungsgemäßen Kopfstütze wobei sich eine Überlastsicherung in der Grundposition befindet,
Fig. 2 die Kopfstütze in Anlehnung an Fig. 1, wobei sich die Überlastsicherung in der Auslöseposition befindet,
Fig. 3 eine schematische rückwärtige Längsschnittdarstellung der Kopfstütze, wobei sich die Überlastsicherung in der Grundposition befindet,

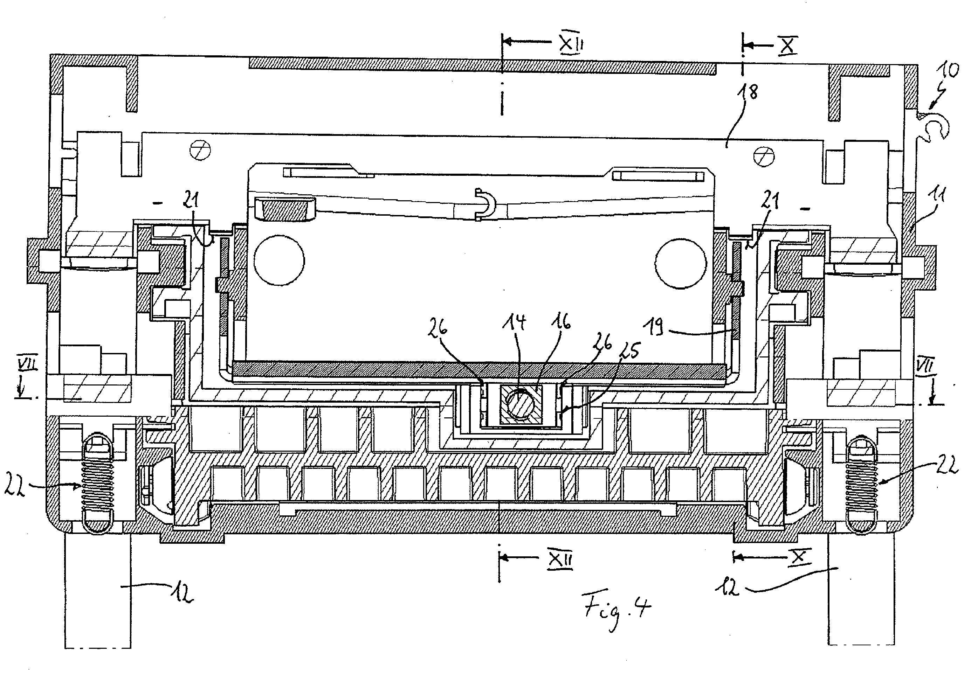

Fig. 4 in Anlehnung an Fig. 3 die Kopfstütze, wobei sich die Überlastsicherung in der Auslöseposition befindet,
Fig. 5 eine schematische Querschnittdarstellung gemäß Schnittlinie V-V in Fig. 3,

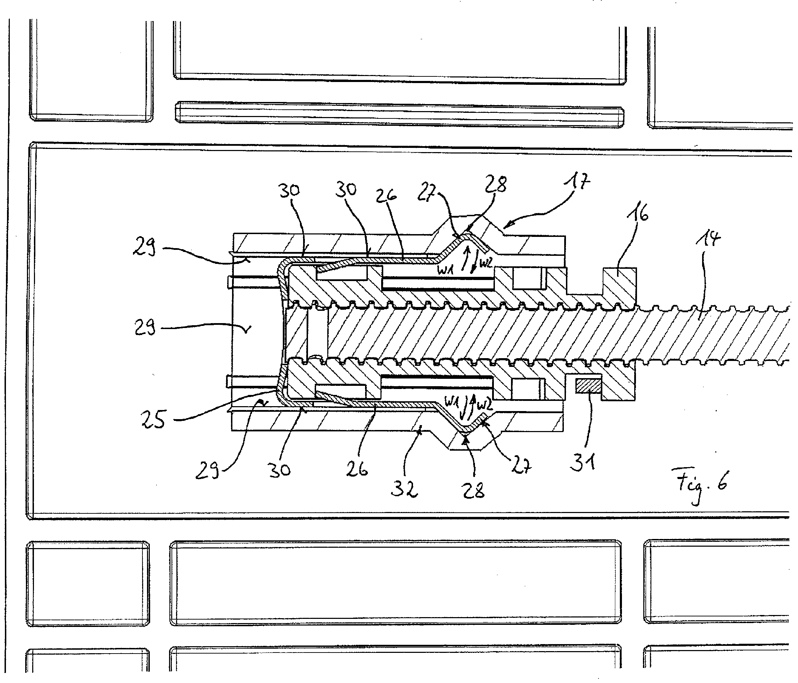

Fig. 6 eine vergrößerte Darstellung des Ausschnitts gemäß Ausschnittlinie VI in Fig. 5,

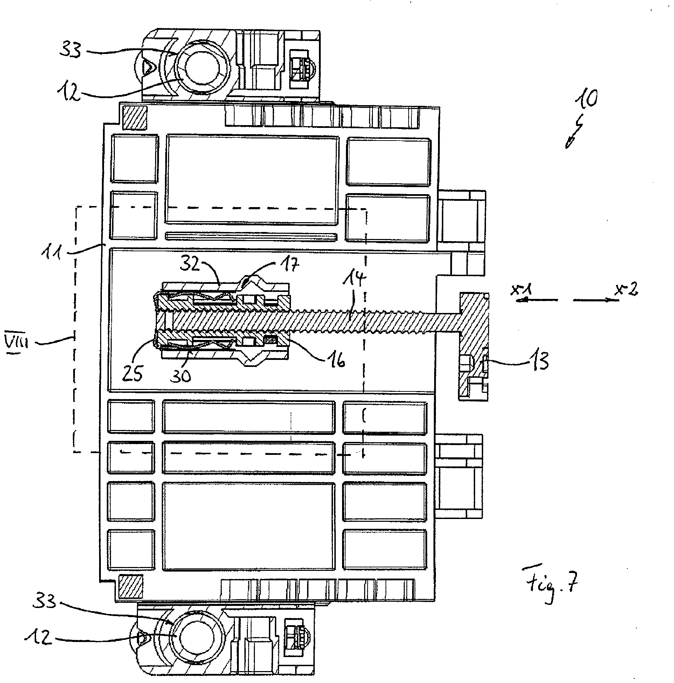

Fig. 7 eine schematische Querschnittdarstellung gemäß Schnittlinie VII-VII in Fig. 4

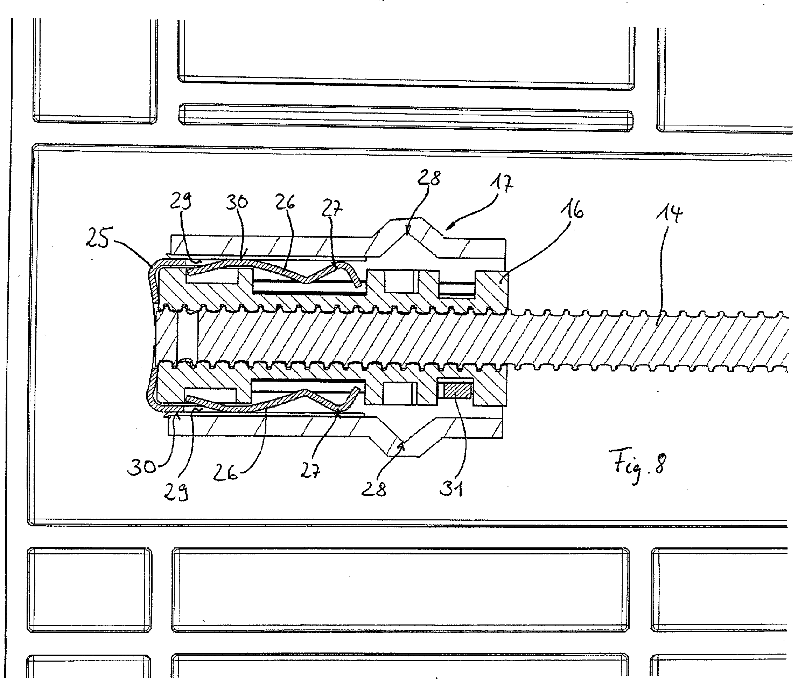

Fig. 8 eine vergrößerte Darstellung des Ausschnitts gemäß Ausschnittlinie VIII in Fig. 7,
Fig. 9 eine schematische Längsschnittdarstellung der Kopfstütze gemäß Schnittlinie IX-IX in Fig. 3,

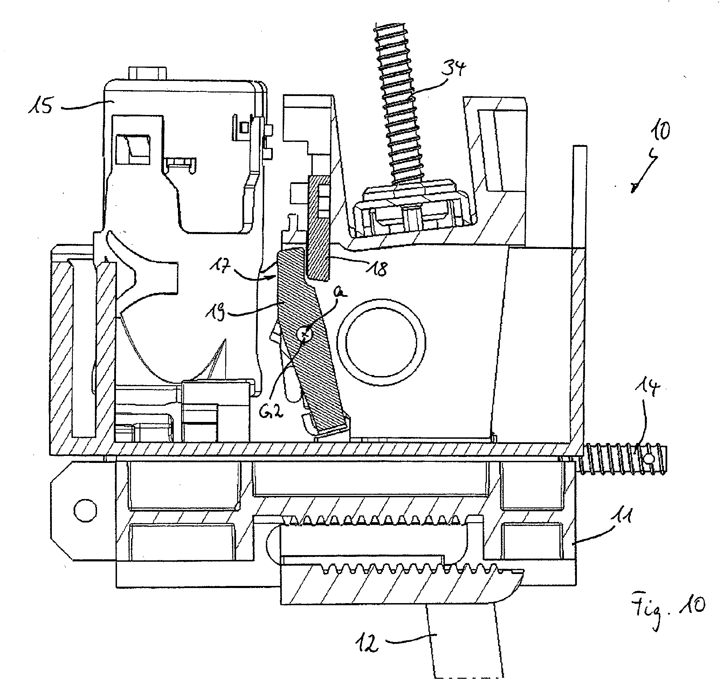

Fig. 10 eine schematische Längsschnittdarstellung der Kopfstütze gemäß Schnittlinie X-X in Fig. 4,

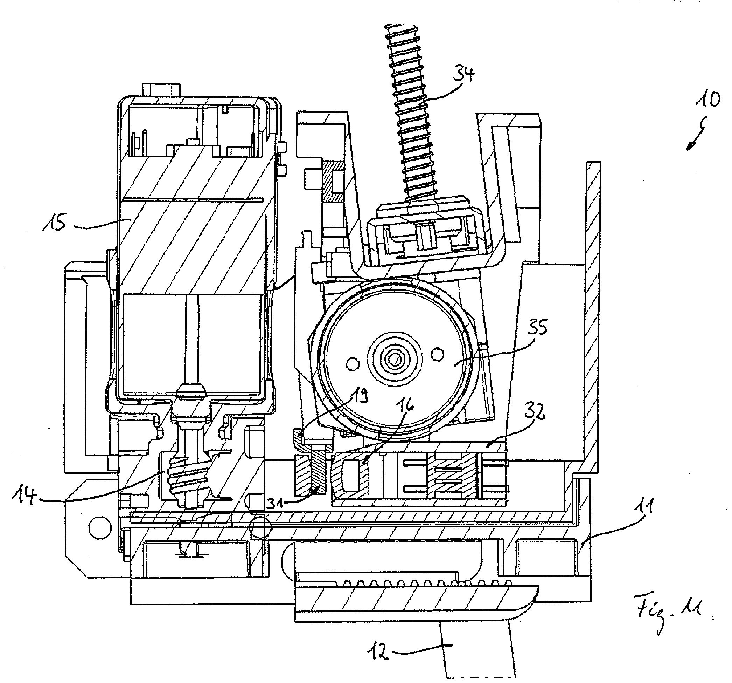

Fig. 11 eine schematische Längsschnittdarstellung der Kopfstütze gemäß Schnittlinie XI-XI in Fig. 3,

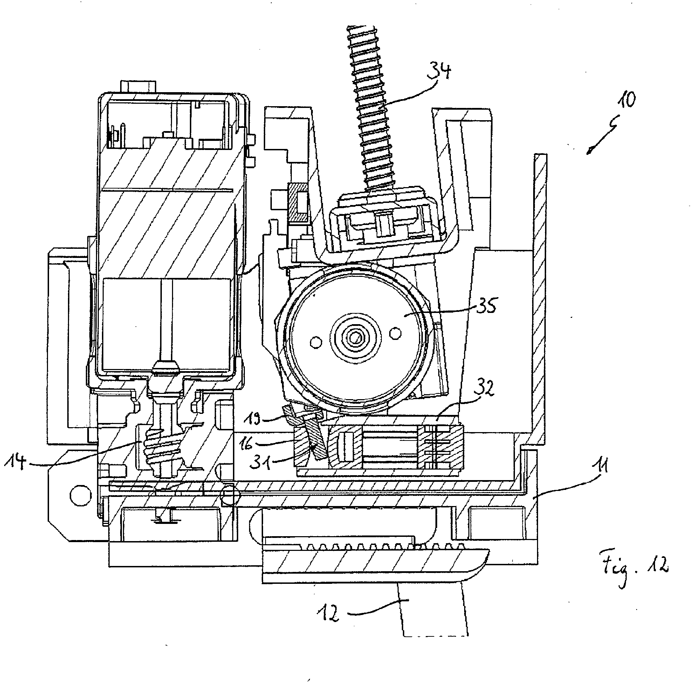

Fig. 12 eine schematische Längsschnittdarstellung der Kopfstütze gemäß Schnittlinie XII-XII in Fig. 4.
Fig. 13 eine schematische Ausschnittdarstellung eines zweiten Ausführungsbeispiels der Kopfstütze, wobei sich die Überlastsicherung in der Grundposition befindet,
Fig. 14 eine schematische Ausschnittdarstellung in Anlehnung an Fig. 13, wobei sich die Überlastsicherung in der Auslöseposition befindet,
Fig. 15 eine schematische Ausschnittdarstellung eines dritten Ausführungsbeispiels der Kopfstütze, wobei sich die Überlastsicherung in der Grundposition befindet,
Fig. 16 eine schematische Ausschnittdarstellung des dritten Ausführungsbeispiels der Kopfstütze in einer anderen Schnittebene,
Fig. 17 in Anlehnung an Fig. 15 die Kopfstütze, wobei sich die Überlastsicherung in der Auslöseposition befindet, und
Fig. 18 in Anlehnung an Fig. 16 die Kopfstütze in der Auslöseposition.

Eine Kopfstütze insgesamt wird in den Fig. mit dem Bezugszeichen 10 bezeichnet. Gleiche Bezugszeichen in den unterschiedlichen Fig. bezeichnen entsprechende Teile, auch wenn kleine Buchstaben nachgestellt oder weggelassen sind.

Die Kopfstütze 10 umfasst einen Träger 11, welcher mit Tragstangen 12 an der Rückenlehne eines nicht dargestellten Fahrzeugsitzes befestigt ist. Der Träger 11 ist in nicht dargestellter Weise in Richtung y1, y2 in der Höhe verstellbar. Dies kann z.B. durch eine Verstellung des Trägers 11 relativ zu den Tragstangen 12 erfolgen. Die Kopfstütze 10 umfasst ferner ein Kopfanlageteil 13, welches in Richtung x1, x2 bewegbar in dem Träger 11 gelagert ist. An dem Kopfanlageteil 13 ist eine Spindel 14 befestigt, die von einem Motor 15 angetrieben werden kann, um das Kopfanlageteil 13 in Richtung x1, x2 zu bewegen.

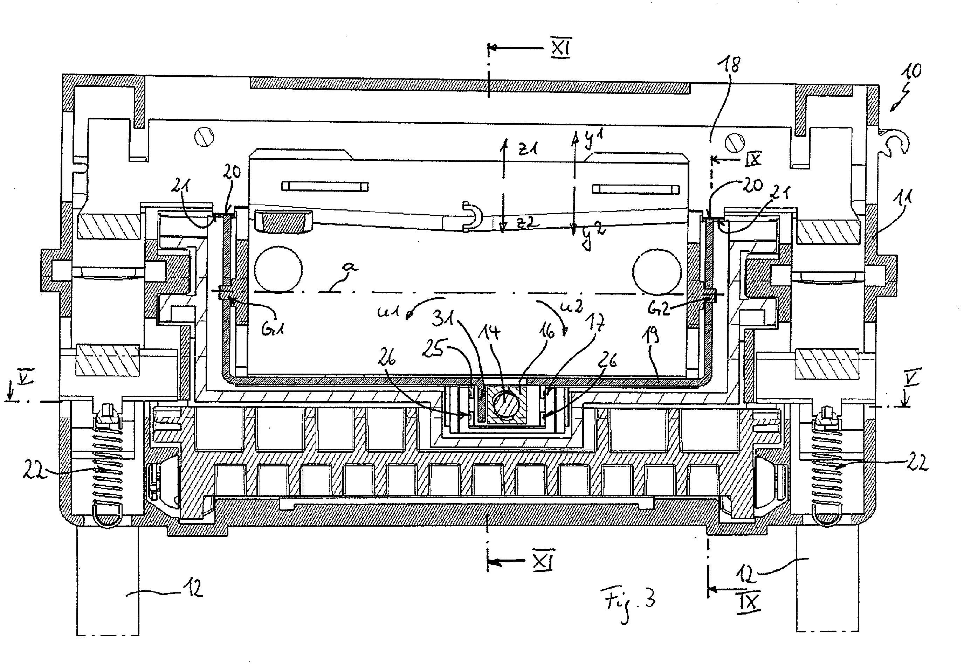

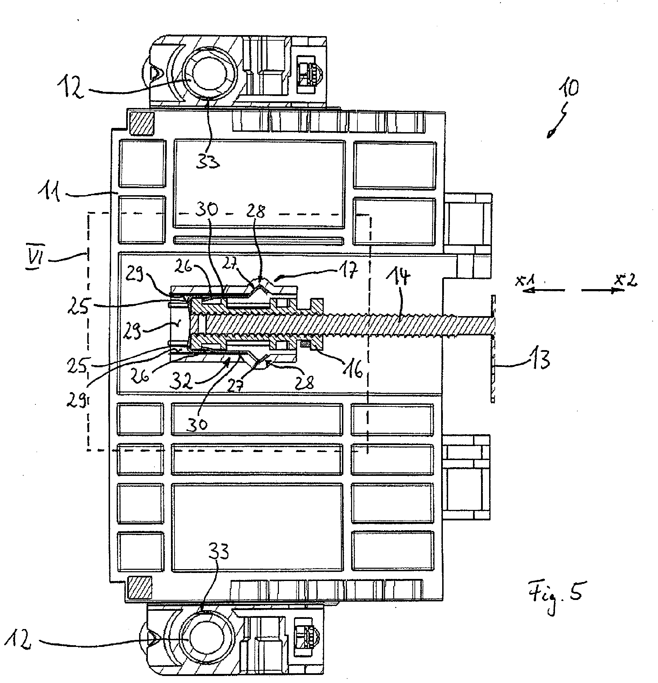

Eine Spindelmutter 16 (siehe die Fig. 3 und 5) weist ein Innengewinde auf, welches mit dem Außengewinde der Spindel 14 in Eingriff ist. Die Spindelmutter 16 ist an dem Träger 11 befestigt, so dass sich die Spindel 14 an der Spindelmutter 16 abstützen kann. Wenn die Spindel 14 in Richtung u1 dreht, wird das Kopfanlageteil 13 in Richtung x1 und wenn die Spindel 14 in Richtung u2 dreht wird das Kopfanlageteil in Richtung x2 bewegt. In Fig. 5 sind ferner Lagerungen 33 erkennbar, die in den Träger 11 eingeformt sind. Mittels der Lagerungen 33 ist der Träger 11 auf den Tragstangen 12 gelagert. Die Lagerungen 33 umfassen Rippen, mit denen der Träger an den Tragstangen 12 geführt ist.

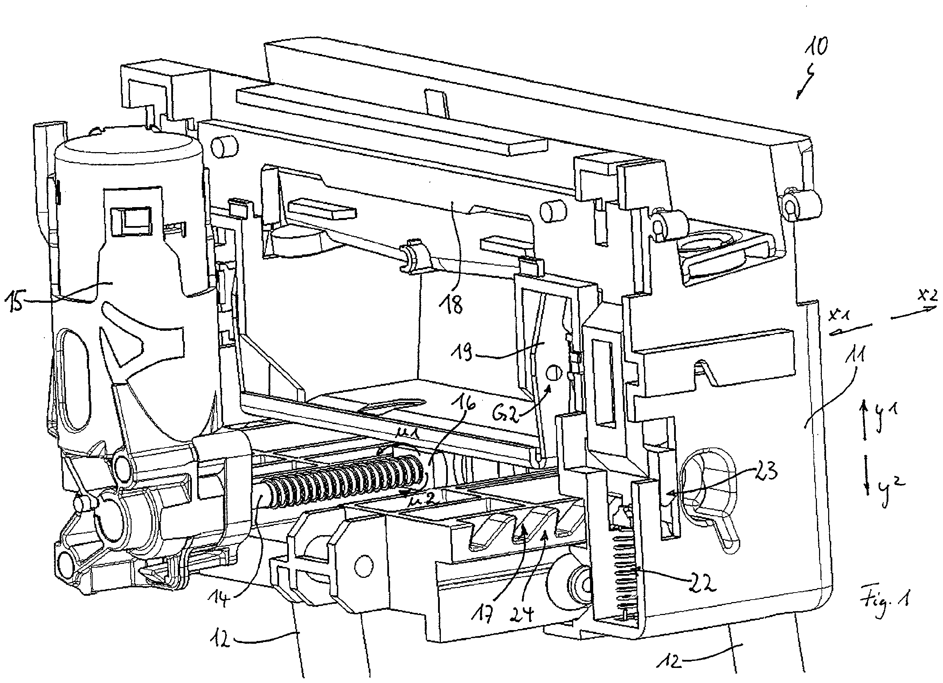

Eine Überlastsicherung 17 umfasst einen Schieber 18 sowie einen Sicherungsbügel 19. Der Sicherungsbügel 19 bildet mit dem Träger 11 Drehgelenke G1 und G2 und ist auf diese Weise um eine Drehachse a schwenkbar. In einer Grundposition der Überlastsicherung 17 stehen Stützflächen 20 des Sicherungsbügels 19 mit Halteflächen 21 des Schiebers 18 in Kontakt. Der Schieber 18, welcher in Richtung z1, z2 bewegbar in dem Träger 11 gelagert und von Federn 22 in Richtung z2 belastet ist, kann sich daher aus der in Fig. 1 dargestellten Grundposition nicht in Richtung z2 in Richtung der Verriegelungsposition bewegen.

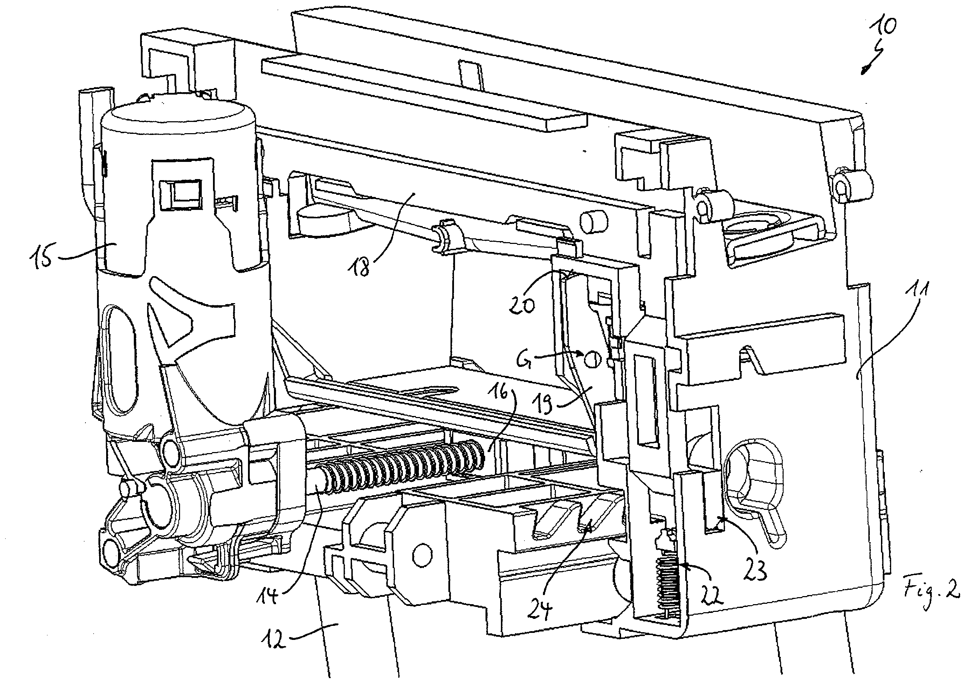

In der Verriegelungsposition, die in Fig. 2 dargestellt ist, befinden sich Anschläge 23 des Schiebers 18 nicht in Eingriff mit einer Verzahnung 24, welche an dem Kopfanlageteil 13 befestigt ist. In der Auslöseposition der Kopfstütze 10, die durch Überbelastung des Kopfanlageteils 13 in Richtung x1 hervorgerufen wird, befinden sich die Anschläge 23 in Eingriff mit den Verzahnungen 24.

An der Spindelmutter 16 ist eine Federklammer 25 befestigt. Die Federklammer 25 umfasst Arme 26, die an ihren freien Endbereichen mit Wulsten 27 versehen sind. Die Wulste 27 sind komplementär zu Vertiefungen 28 ausgebildet, welche von einem Sitz 32 des Trägers 11 gebildet sind. Der Sitz 32 weist zudem Führungsflächen 29 auf, welche zur Führung von Außenflächen 30 der Spindelmutter 16 vorgesehen sind. Die Arme 26 sind in Richtung w1 vorgespannt und auf diese Weise in Eingriffsrichtung mit den Vertiefungen 28 belastet. Bei Überschreitung einer zulässigen Höchstkraft die über die Spindel 14 auf die Spindelmutter 16 übertragen wird, bewegen sich die Arme 26 durch elastische Verformung in Richtung w2 außer Eingriff mit den Vertiefungen 28. Die Spindelmutter 16 ist dann nicht mehr in ihrem Sitz gehalten und Außenflächen 30 der Spindelmutter 16 gleiten entlang der Führungsflächen 29 in Richtung x1 in die in Fig. dargestellte Auslöseposition.

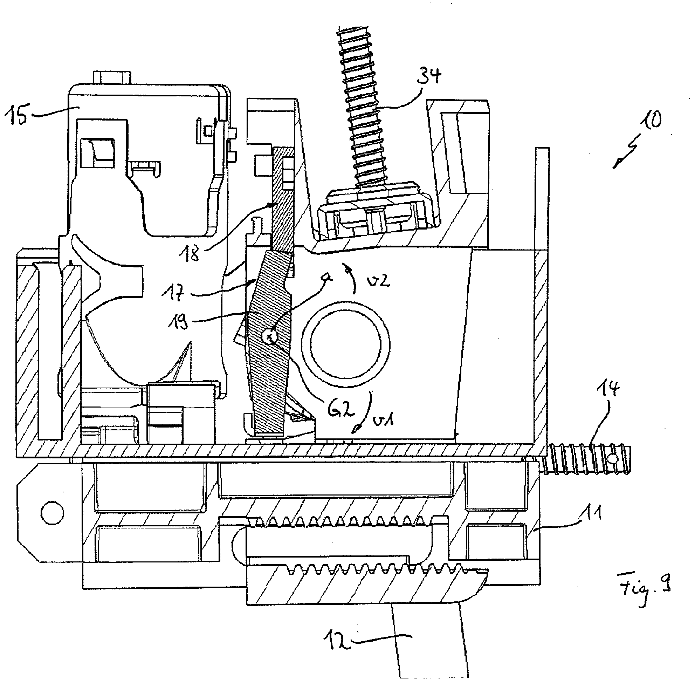

Ein an dem Sicherungsbügel 19 befestigter Steg 31 ist mit der Spindelmutter 16 verbunden. Durch die Bewegung der Spindelmutter 16 von der Grundposition in die Auslöseposition wird der Sicherungsbügel 19 um die Schwenkachse a in Richtung v2 geschwenkt (siehe Fig. 9). Dabei geraten die Stützflächen 20 außer Eingriff mit den Halteflächen 21. Der Schieber 18 wird von den Federn 22 aus der Grundposition in Richtung z2 in Eingriff mit der Verzahnung 24 in die Auslöseposition bewegt. In der Auslöseposition ist aufgrund der Zahngeometrie der Verzahnung 24, die ein Form-Richtgesperre darstellt, eine Bewegung des Kopfanlageteils 13 in Richtung x2 möglich, eine Bewegung in Richtung x1 jedoch verriegelt.

Um die Kopfstütze 10 wieder in ihre Ausgangsposition zurückzuversetzen, muss der Schieber 18 wieder in Richtung z1 bewegt werden und die Stützflächen 20 müssen wieder mit den Haltefläche 21 in Eingriff gebracht werden, indem der Sicherungsbügel 19 in Richtung v1 zurück geschwenkt wird. Ferner ist die Spindelmutter 16 in Richtung x2 in ihren Sitz zurückzuverlagern, bis die Wulste 27 in Eingriff mit den Vertiefungen 28 sind.

Der Vollständigkeit halber sei noch erwähnt, dass die Kopfstütze 10 einen zweiten Antrieb für eine Höhenverstellung aufweist, welchem eine zweite Spindel 34 sowie ein elektrischer Motor 35 zugeordnet sind.

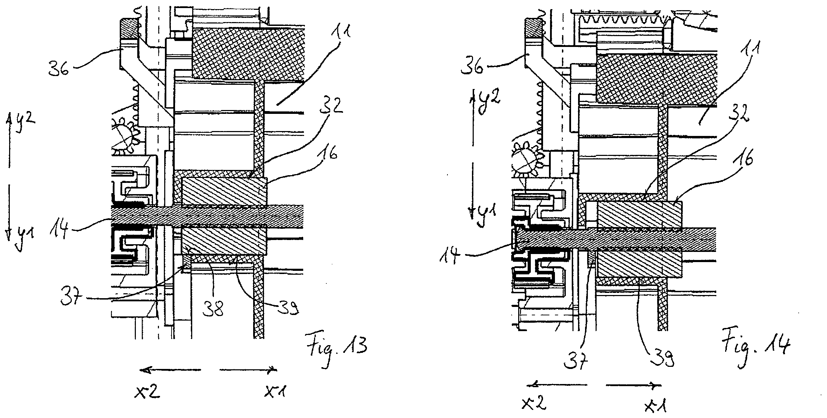

In den Fig. 13 und 14 ist ein zweites Ausführungsbeispiel dargestellt. Die Funktionsweise der Kopfstütze gemäß dem zweiten Ausführungsbeispiel gleicht grundsätzlich der des ersten Ausführungsbeispiels. Der Unterschied zu dem ersten Ausführungsbeispiel besteht lediglich darin, dass die Spindelmutter 16 nicht über einen Sicherungsbügel mit dem Schieber verbunden ist. Gemäß Fig. 13 weist die Spindel 14 ein Außengewinde auf, welches mit einem Innengewinde der Spindelmutter 16 in Eingriff ist. Ein Schieber 36 umfasst ein Steuerelement 37, das an dem Schieber 36 befestigt ist. In einer alternativen Ausführungsform könnten der Schieber 36 und das Steuerelement 37 auch ein Teil sein. Gemäß Fig. 13 befindet sich die Spindelmutter 16 in der Bewegungsbahn des Steuerelements 37, wenn sie in ihrem Sitz 32 angeordnet ist. Eine Kontaktfläche 38 des Steuerelements 37 liegt an einer Außenfläche 39 der Spindelmutter 16 an. Der Schieber 36, welcher in Richtung y2 federbelastet ist, kann sich daher nicht in Richtung y2 bewegen.

Bei Überlast auf das in Fig. 13 nicht dargestellte Kopfanlageteil wird die Spindelmutter 16 in Richtung x1 aus ihrem Sitz 32 in die in Fig. 14 dargestellte Auslöseposition bewegt. Die Spindelmutter 16 befindet sich nicht mehr in der Bewegungsbahn des Steuerelements 37. Der Schieber 36 kann sich daher in Richtung y2 in Eingriff mit der Verzahnung 24 bewegen.

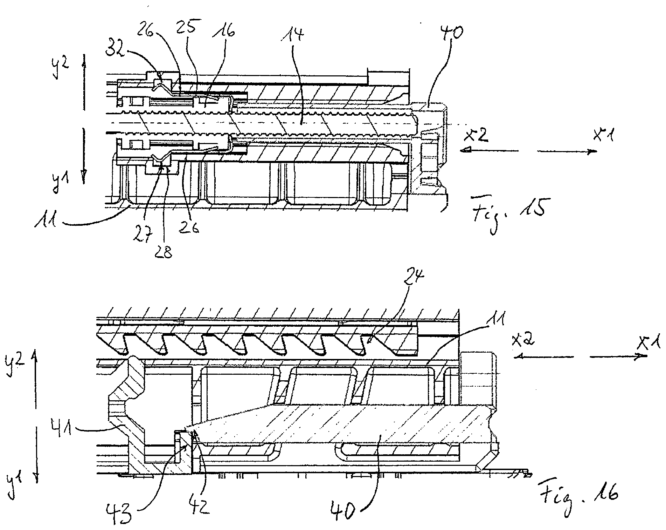

Ein drittes Ausführungsbeispiel ist in den Fig. 15 bis 18 dargestellt. Die Funktionsweise der Kopfstütze gemäß dem dritten Ausführungsbeispiel gleicht grundsätzlich der des ersten Ausführungsbeispiels. Der Unterschied besteht darin, dass anstelle des Sicherungsbügels 19 ein Sicherungsschieber 40 vorgesehen ist, welcher mit einem Schieber 41 zusammenwirkt.

Die Spindel 14 und die Spindelmutter 16 funktionieren in der gleichen Weise wie bei dem ersten Ausführungsbeispiel. Gemäß Fig. 15 befindet sich die Spindelmutter 16 in ihrem Sitz 32. Ein Sicherungsschieber 40 ist in Richtung x1, x2 bewegbar gelagert und mit der Spindelmutter 16 bewegungsverbunden. Der Sicherungsschieber 40 umfasst einen Sperrnocken 42 (siehe Fig. 16), welcher in der Grundposition der Überlastsicherung gemäß Fig. 16 in der Bewegungsbahn eines Schiebers 41 angeordnet ist. Der Schieber 41 ist auf diese Weise außer Eingriff mit der Verzahnung 24 gehalten.

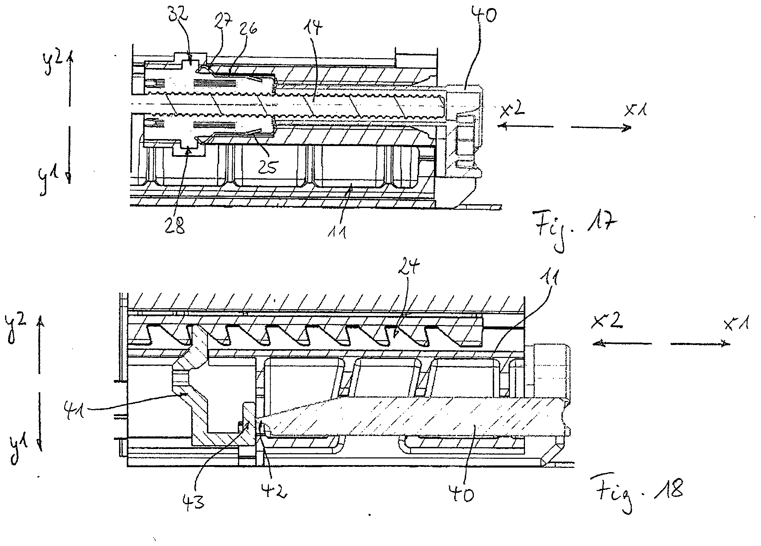

Wird die Spindelmutter 16 durch Überlast auf das in Fig. 15 nicht dargestellte Kopfanlageteil in Richtung x1 in die Auslöseposition bewegt, verlagert sich der Sicherungsschieber 40 aufgrund der Bewegungskopplung ebenfalls in Richtung x1. Die Auslöseposition ist in den Fig. 17 und 18 dargestellt. Die Spindelmutter 16 ist aus ihrem Sitz 32 herausbewegt. Der Sicherungsschieber 40 ist bezüglich der in dem Fig. 15 und 16 gezeigten Position ebenfalls in Richtung x1 verlagert. Der Sperrnocken 42 befindet sich nicht mehr in der Bewegungsbahn einer Rückhaltebereichs 43 des Schiebers 41. Da der Schieber 41 in Richtung y2 federbelastet ist, bewegt er sich in Richtung y2 in Eingriff mit der Verzahnung 24. Das Kopfanlageteil ist dann verriegelt und kann nicht mehr in Richtung x1 bewegt werden.

## Patentansprüche

1. Kopfstütze für Fahrzeugsitze, die mittels wenigstens einer Tragstange (12) an dem Fahrzeugsitz gehalten ist, wobei die Kopfstütze (10) wenigstens ein Verstellteil (13) umfasst welches mit mindestens einem Antrieb (14, 15, 16, 22) relativ zu der Rückenlehne verlagerbar ist, wobei der Antrieb (14, 15, 16, 22) mindestens eine erste verstellteilfeste Antriebseinrichtung (14, 15) und eine zweite rückenlehnenfeste Antriebseinrichtung (16, 22) umfasst, wobei der Antrieb (14, 15, 16, 22) eine Überlastsicherung (17) umfasst, welche durch Überschreiten einer auf das Verstellteil (13) wirkenden Maximalkraft von einer Grundposition in eine Auslöseposition bewegbar ist, wobei in der Auslöseposition der Antrieb (14, 15, 16, 22) teilweise oder vollständig von der auf das Verstellteil (13) wirkenden Kraft entlastet ist, **dadurch gekennzeichnet, dass** die Überlastsicherung (17) eine Verriegelungsvorrichtung (18, 19, 24) umfasst, welche durch eine Bewegung einer Kupplung der Überlastsicherung aus einer Kupplungsposition in eine Entkupplungsposition aus einer entriegelten Position in eine verriegelte Position bewegt wird, wobei in der verriegelten Position eine Bewegung des Verstellteils (13) arretiert ist.

2. Kopfstütze nach Anspruch 1, **dadurch gekennzeichnet, dass** die Überlastsicherung (17) eine Kupplung (22, 32) umfasst welche aus einer Kupplungsposition in eine Entkupplungsposition bewegbar ist.

3. Kopfstütze nach Anspruch 2, **dadurch gekennzeichnet, dass** die Kupplung (22, 32) der ersten Antriebseinrichtung und / oder der zweiten Antriebseinrichtung (16, 22) zugeordnet ist.

4. Kopfstütze nach einem der vorangehenden Ansprüche, **dadurch gekennzeichnet, dass** der Antrieb eine Spindel (14) und eine Spindelmutter (16) umfasst, wobei die Spindel (14) mit der Spindelmutter (16) in Eingriff ist.

5. Kopfstütze nach Anspruch 2 oder 3, **dadurch gekennzeichnet, dass** die Kupplung eine Feder (22) umfasst, welche die Kupplung in der Kupplungsposition hält und bei einem Überschreiten der Maximalkraft durch Verformung der Feder (22) die Kupplung in die Entkupplungsposition bewegbar ist.

6. Kopfstütze nach Anspruch 5, **dadurch gekennzeichnet, dass** die Feder (22) der Spindelmutter (16) zugeordnet ist.

7. Kopfstütze nach einem der Ansprüche 5 oder 6, **dadurch gekennzeichnet, dass** die Feder (22) mit ersten Formschlusselementen (27) versehen ist, welche mit zweiten Formschlusselementen (28) eines Federsitzes (32) formschlüssig lösbar in Eingriff bringbar sind.

8. Kopfstütze nach einem der vorangehenden Ansprüche, **dadurch gekennzeichnet, dass** die Verriegelungsvorrichtung (18, 19, 24) wenigstens ein erstes rückenlehnenfestes Verriegelungselement (18, 19) umfasst, welches mit mindestens einem zweiten verstellteilfesten Verriegelungselement (24) lösbar in Eingriff bringbar ist.

9. Kopfstütze nach Anspruch 8, **dadurch gekennzeichnet, dass** das erste Verriegelungselement von einem Schieber (18) und das zweite Verriegelungselement von einer Verzahnung (24) gebildet ist.

## Claims

1. Headrest for vehicle seats which is retained on the vehicle seat by means of at least one supporting rod (12), the headrest (10) comprising at least one adjusting part (13) which can be moved relative to the backrest by means of at least one drive (14, 15, 16, 22), and the drive (14, 15, 16, 22) comprises at least a first drive mechanism (14, 15) secured to the adjusting part and a second drive mechanism (16, 22) secured to the backrest, and the drive (14, 15, 16, 22) comprises an overload safety device (17) which can be moved from an initial position into a release position by exceeding a maximum force acting on the adjusting part (13), and in the release position the drive (14, 15, 16, 22) is partially or completely relieved of the force acting on the adjusting part (13), **characterised in that** the overload safety device (17) comprises a locking mechanism (18, 19, 24) which is moved from an unlocked position into a locked position by a movement of a coupling of the overload safety device from a coupling position into a decoupling position, a movement of the adjusting part (13) being blocked in the locked position.

2. Headrest as claimed in claim 1, **characterised in that** the overload safety device (17) comprises a coupling (22, 32) which can be moved from a coupling position into a decoupling position.

3. Headrest as claimed in claim 2, **characterised in that** the coupling (22, 32) is assigned to the first drive mechanism and/or the second drive mechanism (16, 22).

4. Headrest as claimed in one of the preceding claims, **characterised in that** the drive comprises a spindle (14) and a spindle nut (16) and the spindle (14) engages with the spindle nut (16).

5. Headrest as claimed in claim 2 or 3, **characterised in that** the coupling comprises a spring (22) which retains the coupling in the coupling position and the coupling can be moved into the decoupling position when the maximum force is exceeded due to deformation of the spring (22).

6. Headrest as claimed in claim 5, **characterised in that** the spring (22) is assigned to the spindle nut (16).

7. Headrest as claimed in one of claims 5 or 6, **characterised in that** the spring (22) is provided with first frictional connecting elements (27) which can be moved into engagement with second frictional connecting elements (28) of a spring seat (32) in a frictionally connected releasable manner.

8. Headrest as claimed in one of the preceding claims, **characterised in that** the locking mechanism (18, 19, 24) comprises at least one first locking element (18, 19) secured to the backrest which can be moved into a releasable engagement with at least one second locking element (24) secured to the adjusting part.

9. Headrest as claimed in claim 8, **characterised in that** the first locking element is provided in the form of a slide (18) and the second locking element is provided in the form of teeth (24).

## Revendications

1. Appuie-tête pour des sièges de véhicule qui est retenu sur le siège de véhicule par au moins une tige de support (12), l'appui-tête (10) présentant au moins une pièce de réglage (13) qui peut être déplacée par rapport au dossier par au moins un mécanisme d'entraînement (14, 15, 16, 22), le dispositif d'entrainement (14, 15, 16, 22) comportant au moins un premier dispositif d'entraînement (14, 15) fixé à la pièce de réglage et un deuxième dispositif d'entraînement (16, 22) fixé sur le dossier, l'entraînement (14, 15, 16, 22) comportant un dispositif de sécurité de surcharge (17) qui peut être déplacé d'une position de départ dans une position de libération quand une force maximale agissant sur l'élément de réglage (13) est dépassée, et, dans la position de libération, l'entraînement (14, 15, 16, 22) étant partiellement ou totalement dégagé de la force agissant sur la pièce de réglage (13), **caractérisé en ce que** le dispositif de sécurité de surcharge (17) comporte un dispositif de verrouillage (18, 19, 24) qui est déplacé par un mouvement d'un dispositif d'accouplement du dispositif de sécurité de surcharge depuis une position d'accouplement dans une position de désaccouplement, depuis une position déverrouillée dans une position verrouillée, un mouvement de la pièce de réglage (13) étant arrêté dans la position verrouillée.

2. Appuie-tête selon la revendication 1, **caractérisé en ce que** le dispositif de de sécurité de surcharge (17) comprend un dispositif d'accouplement (22, 32) qui est mobile depuis une position d'accouplement dans une position de désaccouplement.

3. Appuie-tête selon la revendication 2, **caractérisé en ce que** le dispositif d'accouplement (22, 32) est associé au premier dispositif d'entraînement (14, 15) et/ou au deuxième dispositif d'entraînement (16, 22).

4. Appuie-tête selon l'une des précédentes revendications, **caractérisé en ce que** l'entrainement comprend une broche (14) et un écrou de broche (16), la broche (14) étant en prise avec l'écrou de broche (16).

5. Appuie-tête selon la revendication 2 ou 3, **caractérisé en ce que** le dispositif d'accouplement comporte un ressort (22) qui maintient le dispositif d'accouplement dans la position d'accouplement et qu'en cas d'un dépassement de la force maximale par déformation du ressort (22), le dispositif d'accouplement peut être déplacé dans la position de désaccouplement.

6. Appuie-tête selon la revendication 5, **caractérisé en ce que** le ressort (22) est associé à l'écrou de broche (16).

7. Appuie-tête selon l'une des revendications 5 ou 6, **caractérisé en ce que** le ressort (22) est muni de premiers éléments de complémentarité de forme (27) qui peuvent être mis en prise de façon libérable en complémentarité de forme avec des deuxièmes éléments de complémentarité de forme (28) d'un siège de ressort (32).

8. Appuie-tête selon l'une des précédentes revendications, caractérisé en ce le dispositif de verrouillage (18, 19, 24) comporte au moins un premier élément de verrouillage (18, 19) fixé sur le dossier qui peut être mis en prise de façon mobile avec au moins un deuxième élément de verrouillage (24) fixé au dossier.

9. Appuie-tête selon l'une des précédentes revendications, **caractérisé en ce que** le dispositif de verrouillage est formé d'un coulisseau (18) et du deuxième élément de verrouillage d'un engrenage (24).
